Europäisches Patentamt

European Patent Office

Office européen des brevets

(19)

(11) Publication number: **0 159 322**
**B1**

(12) # EUROPEAN PATENT SPECIFICATION

(45) Date of publication of patent specification :
21.10.87

(21) Application number : 84903150.5

(22) Date of filing : 15.08.84

(86) International application number :
PCT/US 84/01292

(87) International publication number :
WO/8501500 (11.04.85 Gazette 85/09)

(51) Int. Cl.⁴ : **C 04 B 28/04, C 04 B 24/12** //
(C04B28/04, 18:08, 24:08,
24:16, 24:32),(C04B28/04,
18:08, 24:12, 24:16,
24:32),(C04B28/04, 18:08,
24:08, 24:12, 24:16)

(54) ADDITIVE FOR HYDRAULIC CEMENT MIXES.

(30) Priority : 29.09.83 US 537186

(43) Date of publication of application :
30.10.85 Bulletin 85/44

(45) Publication of the grant of the patent :
21.10.87 Bulletin 87/43

(84) Designated contracting states :
AT BE CH DE FR GB LI LU NL SE

(56) References cited :
AU-A- 521 435
DE-A- 2 310 810
FR-A- 2 120 541
US-A- 3 642 506
US-A- 4 375 987
Chemical Abstracts, volume 90, no. 14, issued 2 April
1979, Columbus, Ohio (US) see page 317, ref. 108916a
& JP A 78132030
A. JARRIGE: "Les Cendres Volantes", 1971, Editions
Eyrolles, Paris (FR) page 10 "Use of Fly ash in
concrete"

(73) Proprietor : SANDOZ AG
Lichtstrasse 35
CH-4002 Basel (CH)
BE CH FR GB LI LU NL SE
SANDOZ-PATENT-GMBH
Humboldtstrasse 3
D-7850 Lörrach (DE)
DE
SANDOZ-ERFINDUNGEN Verwaltungsgesellschaft
m.b.H.
Brunner Strasse 59
A-1235 Wien·(AT)
AT

(72) Inventor : NICHOLSON, Richard
4868 Westbourne Road
Lyndhurst, OH 44124 (US)

## Description

Background of the invention

This invention relates to additive compositions, otherwise known as air-entraining admixtures, for incorporation in hydraulic cement mixes, such as concretes and mortars, for the purpose of increasing the durability of such mixes, after hardening, to cycles of freezing and thawing under conditions of water saturation. The increased durability of the cementitious mix under such conditions is attained by incorporation of a system of air bubbles into the plastic mix in such a way that it will remain in the mix after hardening, and meet the specifications of resistance to freezing and thawing set forth in ASTM designation C 260. This requires that the air void system be an appropriate amount as volume percent of the hardened cementitious mass and that it have bubbles of an appropriate range of sizes and spacing parameters as determined by ASTM designation C 457. In order to attain this condition it is well known in the art to use surface agents to effect the desired air entrainment.

A number of chemical agents to achieve a desirable air entrainment are known in the art and are commercially available. Generally, these are organic chemicals having a surface active functionally at the air-water interface and fall broadly into the classes of soaps and detergents. One of the best known agents of this kind is known in the art as Vinsol Resin®, and is normally employed as an aqueous alkaline solution which is added to a plastic, cementitious mix, either alone or in combination with other admixtures. In the latter case, the Vinsol Resin®, solution is separately added because of the chemical incompatibility with many other admixtures, due to the fact that the pH and the presence of calcium and various other ions renders insoluble the alkali-neutralized acids comprising Vinsol Resin®. Thus, Vinsol Resin®, is the sodium soap of specific resin acids derived by solvent extraction from pine stumps. It is also known in the art to employ various anionic and nonionic surfactants broadly in the detergent class to effect a desirable kind and degree of air entrainment in cementitious mixes. Thus, U.S. Patent 4,249,948 discloses the use of an alpha olefin sulfonate with a water reducing agent wherein the former acts as an air-entraining agent in a hydraulic cement composition.

Materials described above generally and historically have been satisfactory for their intended use. However, recent changes in concrete technology have caused an increase in instances of unsatisfactory performance. A significant change in concrete technology is employment of pozzolanic materials as additions or more commonly as partial substitutes for a portion of the portland cement on a larger scale than hitherto. In particular, fly ash, a by-product of coal combustion in the generation of electric power, is finding increasing usage as a pozzolanic cement substitute. The composition of fly ashes is determined by the nature of the coal burned and the combustion conditions but generally they are aluminosilicate glasses with varying amounts of iron oxide, alkali and alkaline earth cations and residual unburned carbon. Certain ones, rich in calcium ions, may be not only pozzolanic in nature but may possess some cementitious qualities inherently, because of their mineralogical composition, such as the presence of tricalcium aluminate. However, it is the residual carbon content which is generally considered to be associated with the increased incidence of failure of the known air entraining agents to perform in a desirable manner. These failures include the need to use higher dosages of admixtures known in the art, and even more troublesome, a tendency to either lose air, or to uncontrollably increase in air content, as mixing time is extended. Associated with this loss of air is a loss in workability as measured by the slump cone in accordance with the American Society for Testing and Materials (ASTM) designation C 143.

Thus, there exists the continuing need to discover surface active agents, or combinations of such agents, that will overcome the probleme described above.

Summary of the invention

The present invention is an additive composition for incorporation in hydraulic cement mixes, such as normal concretes, mortars and grouts and neat cement mixes, with optional replacement of a portion of the hydraulic cement of said mixes with a corresponding amount of pozzolanic material, and the resulting improved cementitious mixes and process for incorporating the additive composition.

For purposes of this invention the term « hydraulic cement » is intended to mean and to include all cementitious compositions based primarily on silicates capable of being set and hardened by the action of water, such as portland cements, sulfate-resisting cements, blast furnace cements and pozzolanic cements, but the preferred use of the present additive composition is in portland cement mixes and such mixes when a portion of the portland cement has been replaced by fly ash. The term « portland cement » is intended to include all cementitious compositions which have a high content of tricalcium silicate, conforming with the specifications set forth in ASTM designation C-150, and the portland blended cements such as those described in ASTM C-595.

Broadly, the invention comprises a hydraulic cement mix including hydraulic cement, aggregate, sufficient water to effect hydraulic setting of the cement, and an additive comprising a mixture of the soluble alkanolamine and alkali salts of fatty acids plus the soluble alkali and alkanolamine salts of certain sulfonic acids such as alpha olefin sulfonic acids plus a third nonionic component such as the fatty acid

2

amides and polyethylene glycol derivatives as well as selected other components, as more fully described hereafter. While these materials may be added in combination in their normal state to a cementitious mix it is most convenient to add them as a single aqueous solution which may have a desired cosmetic coloring agent and if the water employed is not distilled or « deionized » so as to be essentially free of alkaline earth cations, the necessary amount of a chelating agent for these ions may also be added so as to maintain the additive components in solution. The sodium salt of nitrilotriacetic acid is one example of such a chelating agent. The effect of the additive to entrain a desirable amount and kind of air void system in a variety of cementitious mixes and particularly in mixes containing fly ash having a relatively high carbon content as indicated by an ignition loss of up to 6 % or more by weight of fly ash, when the cementitious system is subjected to prolonged mixing up to the order of one hour, was found to depend optimally on the presence of all three of the components described above, although in certain instances combination of two of the three components may produce desirable effects. Thus, the fatty acid salts of soaps which are known as such in the art under prolonged mixing in a cementitious system require relatively high dosages, entrain air slowly, and have a tendency to gain air with extended mixing. The sulfonic acid salts employed alone in cementitious mixes, on prolonged mixing, tend to progressively lose the air which they first entrain. The polyethylene glycol or other nonionic component may or may not of itself be an air-entraining agent in cementitious mixes. However, the unexpected and nonobvious result obtained by employing these three materials in combination in a cementitious system undergoing extended mixing is to yield with a favorable dosage response an excellent air void system stable in the plastic cementitious system and having a desirable improved size and distribution in the cementitious system after hardening.

It is therefore an object of the present invention to provide improved air-entrained hydraulic cement mixes.

It is another object of this invention to provide improved air-entrained hydraulic cement mixes, including concrete, mortar and grout mixes, neat cement and dry mixes, which include an additive composition that will advantageously entrain an air void system having desired characteristics when said additive is employed over a relatively wide dosage range, or have a superior dosage response relative to functionally similar additives known in the art.

## Description of the preferred embodiments

The fatty acid salts of the instant invention may be represented by the following formula :

$$RCOOM$$

where R is an alkyl chain that may be branched or unbranched, saturated or unsaturated, but wherein the number of carbon atoms is in the range from about 12 to about 24, and M is an alkali metal, with sodium or potassium being preferred. Optionally, the fatty acid may be neutralized with triethanolamine so as to produce the triethanolamine salt of the fatty acid, or other alkanolamines may be so employed. The portion of this component in the three-component additive may range from a minimum of about 50 % to a maximum of about 95 % by weight based on dry solids or 100 % active materials.

The salts of the sulfonic acids having a carbon chain length of 12 to 24 may be represented by the following general formula :

$$RSO_3M$$

where R is an alkyl or an alkylaryl group in which the alkyl group may be branched or unbranched and saturated or unsaturated with a number of carbon atoms in the range indicated above for the fatty acid salts and M has the same meaning as described above. Optionally, anionic sulfates may be used. The proportion of this component in two- or three-component additives may vary from 0 % to about 25 % by weight, based on dry solids or 100 % active material.

The preferred nonionic ingredient is a polyethylene glycol derivative which may be represented by the following general formula :

$$RO(CH_2\!-\!CH_2\!-\!O)_nH$$

where n is an integer ranging from about 3 to about 30 R is selected from a group comprising hydrogen, a fatty acid ester, an alkyl or an alkylaryl group. The proportion of this component in the additive of this invention may range from about 0 to about 25 % by weight, based on dry solids or 100 % active material. Optionally, other nonionic components such as fatty acid amides may be used.

In summary the present invention comprises a set of three-component additives comprising up to about 25 % sulfonates with 12 to 24 carbon chain length plus from about 0 % to about 25 % nonionic component and the remainder being a salt of a fatty acid, all on a dry solids basis, and a set of two-component additives of like proportions except that the sulfonic acid salt is absent. In either case the additive is incorporated into a cementitious mix from about .002 % to about .06 % based on dry solids or 100 % active ingredients with respect to total cementitious material. The two-component subsystem obtained when the nonionic component is absent is also useful. In this context the term cementitious material means portland cement plus pozzolanic addition, if any. The pozzolanic additions may be slag as well as fly ash.

In the practice of the present invention the additive is incorporated into hydraulic cement mixes such as portland cement concretes and mortars in amounts sufficient to yield an entrained air void system of the proper amount and quality after extended mixing in the plastic state. As a practical matter the additive is incorporated into the mix as an aqueous solution, which may be of any convenient concentration.

The additive may be incorporated into the mix as a portion of the mix water, but it may also be incorporated in any other convenient manner, including adding it to the dry mix before the water is incorporated therein.

The term aggregate is intended to include both fine aggregate, such as sand, and coarse aggregate, such as crushed stone or gravel, as in common in the art. In general for mortars, the aggregate may be sand or other fine aggregate meeting the requirements of ASTM standard C-33. The proportions of fine and coarse aggregate will vary depending upon the desired use and properties of the mortar or concrete. For most uses, although not limited thereto, the size of the fine aggregate will be within the broad range of about + 4 mesh to — 100 mesh U.S. Standard Sieve (ASTM C-11) (5.37 to 0.149 mm), while the size of the coarse aggregate will be within the broad range of 3 inches (7.6 cm) to 4 mesh (5.37 mm). The coarse aggregate will usually be of mineral origin, such as gravel or crushed rock, but it may in some instances consist at least partially of graded metallic materials such as crushed iron borings, or it may be a manufactured aggregate, such as a slag.

For both mortars and concretes, the amount of water employed generally would be enough to effect hydraulic setting of cementitious material in the mix and to provide suitable workability in the plastic state. This would broadly range from about 20 % to 60 % by weight of the cementitious materials in mortars and about 25 % to 70 % by weight of the cementitious material in concrete mixes. The precise proportion of water will depend on the end use of the cementitious mix as well as on its composition.

For the purpose of illustrating the advantageous results obtainable by the practice of the present invention, plain concrete mixes were prepared and compared to similar mixes containing the additives of the present invention and functionally similar additives previously known. Since there are no standard test methods to demonstrate in the laboratory the loss of air or undesirable gain in air content on extended mixing of concretes containing air entraining agents, it was necessary to devise a procedure that is considered to be representative of practice in the field. The sequence of operations in this procedure are : preparation of concrete mixes with a nominal slump of 5 to 6 inches (10.2 to 12.7 cm) and an air content of 5.0 ± 1.0 % by volume of the concrete. Each mix was designed for a total of 517 lbs/yd$^3$ (307 kg/m$^3$) to 600 lb/yd$^3$ (356 kg/m$^3$) of cementitious material with either portland cement alone or with a combination of portland cement and fly ash, with the latter substituted for 22 % or greater of the cement by weight. The concrete, with an appropriate amount of water to attain the specified slump value is then mixed in a mixer of 2 cubic feet (.057 m$^3$) capacity at 20 revolutions per minute for 3 or 5 minutes. Next, specimens are taken for subsequent determination of parameters of the air void system after hardening when desired and the initial air content is determined by the pressure meter method as described in ASTM standard test method C-231 and the slump value which is an index of workability is determined in accordance with ASTM standard method C-143. Next, agitation is continued at a reduced rate to simulate practice in the field wherein there are delays and variable delivery times, as is discussed in ASTM designation C-94, until about 30 minutes have elapsed. Then, slump and air content are again determined and the material is mixed for an additional 2 minutes. This process is repeated until about 1 hour after initial mixing has elapsed, at which time air content is again determined and additional water is added to restore initial slump. The concrete is mixed for 3 minutes, and air content is again determined. Thus the experiment is terminated at about 67 minutes after the beginning of initial mixing. The retempering by water addition at the final mixing period to restore desired slump follows field practice. It is the air content at this point which is vital to the concrete durability after hardening.

In Table I below are shown data, obtained as outlined above, at an ambient temperature of 72 ºF (22 ºC) and the cementitious material being portland cement only in the proportion of 517 lb/yd$^3$ (307 kg/m$^3$), illustrating the problem of progressive air loss with extended mixing. Dosages of the air entraining additives are on a 100 % solids or active basis, as weight percent to cementitious material. Initial slump was about 5 inches (12.7 cm).

Table I

| Admixture | Vinsol Resin ® | Sodium Alpha Olefin Sulfonate |
|---|---|---|
| Admixture dosage, weight % | .0061 | .00169 |
| Initial Air Content, Vol. % | 5.8 | 5.9 |
| Air, after 1/2 hr. mixing | 4.6 | 4.8 |
| Air, after 1 hr. mixing | 3.4 | 4.0 |
| Air, after slump restored | 3.3 | 3.5 |

The desired air content after slump restoration is a value close to the initial 5.8 volume percent. It is apparent that the air loss with extended mixing and use of Vinsol Resin®, is very significant. Use of one component of the present invention, the sodium alpha olefin sulfonate, somewhat improves air retention, but still, to a lesser extent than is desired.

A combination of the foaming surfactant, sodium alpha olefin sulfonate, and a nonionic agent, in this case, the 1 : 1 molar reaction product of cocamide-diethanolamine, (DEA), when tested in a plastic concrete mix in the manner described above, and results were secured as shown in Table II.

Table II

| Admixture | Vinsol Resin® | Sodium Alpha Olefin Sulfonate plus Cocamide DEA in 5 : 1 Weight Ratio |
|---|---|---|
| Admixture Dosage, weight % | .0069 | .0016 |
| Initial Air Content, Vol. % | 5.8 | 5.6 |
| Air, after 1/2 hr. mixing | 5.2 | 4.6 |
| Air, after 1 hr. mixing | 3.5 | 4.1 |
| Air, after slump restored | 3.3 | 3.7 |

It is apparent that the combination of foaming surfactant and the nonionic agent, as shown above, somewhat further benefits air retention, but still, not to the extent desired. However, when the soap of a low rosin tall oil fatty acid, is added to make a three-component air-entraining admixture, and similar tests are made, results are remarkable and unexpected, as shown by data in Table III below.

Table III

| No. Admixture | Dosage Wt. % of cementit. component | Initial Air Content Vol. % | Air, w/ 30 min. mixing Vol. % | Air w/ 60 min. mixing Vol. % | Air after slump restor. Vol. % |
|---|---|---|---|---|---|
| 1. Vinsol Resin® | .0071 | 5.6 | 4.0 | 2.8 | 2.5 |
| 2. AOS [1] + CD [2] + FA [3] Wt. Ratio : 1 : 1/2 : 6-1/4 | .0070 | 6.0 | 7.5 | 6.8 | 6.6 |
| 3. AOS + CD + FA, Wt. Ratio : 1 : 1 : 6-1/4 | .0075 | 6.0 | 7.8 | 6.0 | 6.8 |
| 4. AOS + CD + FA, Wt. Ratio : 1 : 2 : 6-1/4 | .00685 | 6.0 | 8.0 | 7.1 | 7.0 |

[1] Alpha olefin sulfonate, sodium salt.
[2] Cocamide-diethanolamine reaction product, described above.
[3] The tall oil fatty acid soap, described above.

The very beneficial results illustrated in Table III were unexpected and were shown by further experiments to be due to a synergistic interaction of the three components of the air-entraining agents as shown below, in Tables IV, V and VI. In this case, the experimental conditions described above were employed except that instead of whole concrete, a mortar simulating the mortar fraction of corresponding whole concrete was employed. That is, since air-entrainment occurs wholly within the mortar fraction, removal of aggregate accentuates the effects being measured.

The shorthand symbols defined above are shown in the tables and have the same meaning except that the cocamide-diethanolamine (DEA) reaction product is derived from a 1 : 2 molar ratio of reactants instead of a 1 : 1 molar ratio. It is still properly designated a cocamide DEA product, however.

Table IV

| No. | Admixture | Dose, Wt. % of Cement | Initially Entrained air, Vol. % |
|---|---|---|---|
| 1. | FA | .01 | 2 |
| 2. | AOS | .0016 | 2 |
| 3. | CD | .0032 | 2 |
| 4. | No. 1 + No. 2 + No. 3 | .0148 | 14 |

5

Since 14 is significantly greater than 2 plus 2 plus 2, synergism is strongly indicated by data in Table IV. Note that component CD, although used at twice the dosage of AOS entrains only equal air.

Table V

| No. | Admixture | Dose, Wt. % of Cement | Initially Entrained air, Vol. % |
|---|---|---|---|
| 1. | FA | .0170 | 3 |
| 2. | CD | .0054 | 5 |
| 3. | No. 1 + No. 2 | .0224 | 14 |

Since 14 is significantly greater than 3 plus 5, data of Table V indicate a synergistic interaction of the FA and CD components, with respect to air-entraining efficiency.

Further experimentation revealed that in this type of three-component air-entraining admixture, namely, a combination of a fatty acid soap, a foaming detergent and a nonionic agent as described above, that another type of nonionic agent of the class of which polyethylene glycol is an example, function in the same manner. Experiments were conducted as shown below in Table VI, employing a polyethylene glycol with an average molecular weight of 400. The experimental conditions were the same as previously described except that more severe conditions were imposed. Cement was replaced in the concrete mix by 22 % of its weight with a fly ash that normally aggravates air loss on prolonged mixing of the plastic mix. The total cementitious component, that is, cement plus fly ash, was 517 lb/yd$^3$ (307 kg/m$^3$). In Table VI, the polyethylene glycol is designated PEG and the other two components are designated AOS and FA, as previously defined.

Table VI

| No. Admixture | Dosage Wt. % of cementit. component | Initial Air Content Vol. % | Air, w/ 30 min. mixing Vol. % | Air w/ 60 min. mixing Vol. % | Air after slump restor. Vol. % |
|---|---|---|---|---|---|
| 1. FA + PEG + AOS Wt. Ratio : .75 : .125 : .125 | .0335 | 6.1 | 6.7 | 7.0 | 6.6 |
| 2. FA + AOS Wt. Ratio : .86 : .17 | .0269 | 5.9 | 6.4 | 6.2 | 5.2 |
| 3. FA + AOS + CD Wt. Ratio : .75 : .125 : .125 | .0285 | 6.3 | 6.7 | 6.7 | 5.8 |

Data in Table VI show, in comparing Mix No. 1 and Mix No. 3, that the polyethylene glycol may be substituted for the cocamide-diethanolamine adduct in three-component mixes, with the same component ratios and essentially the same total dosage, namely about .03 weight percent of cementitious material, and similar beneficial effects of retainment of entrained air are secured. Omission of the nonionic component, as shown in Mix No. 2, still results in a desirable result with use of the other two components, but not quite to the same degree.

Further experiments, conducted under the same conditions as described above to secure data for Table VI, led to results shown in Table VII below. These data give insight into why combinations of components are necessary and also show that foaming detergents other than AOS can beneficially be used. The particular one shown in Table VII is the sodium salt of dodecyl benzene sulfonic acid, where the alkyl chain is linear, and is designated DBS. Other components are indicated by symbols defined above.

Table VII

| No. Admixture | Dosage Wt. % of cementit. component | Initial Air Content Vol. % | Air, w/ 30 min. mixing Vol. % | Air w/ 60 min. mixing Vol. % | Air after slump restor. Vol. % |
|---|---|---|---|---|---|
| 1. FA + PEG + DBS Wt. Ratio : .75 : .125 : .125 | .0300 | 6.3 | 6.8 | 7.1 | 6.9 |
| 2. FA | .0503 | 6.0 | 7.4 | 8.1 | 7.3 |
| 3. AOS | .0093 | 6.3 | 2.6 | 2.0 | 1.1 |

In the table above, Mix No. 1 indicate that alkylaryl sulfonate salts may advantageously be employed as the foaming detergent component of the three-component admixture. Data for Mix No. 2 indicates the disadvantages of using the fatty acid salt or soap component alone, namely that a high dosage is required to secure the initial air content desired, namely about 6 volume percent, and that there is a tendency to gain air with increased mixing. Data for Mix No. 3 show the disadvantages of employing the foaming surfactant type of air entraining agent alone, namely, that while it readily entrains the initially desired air content with a low dosage rate, it quickly loses this air with continued mixing.

This high foaming anionic detergent described above and illustrated by alkanolamine and alkali salts of sulfonic acids may be replaced by functionally similar alcohol sulfates and ethoxylated alcohol sulfates as illustrated by data in Table VIII below. In this case DBS as defined above is replaced by sodium laureth 12 sulfate, designated LS. The other symbols have the same meaning earlier described. In addition the nonionic component may be ethoxylated alkylphenol, shown in Table VIII as EAP. The same conditions as previously described for the fly-ash containing mixes were employed.

Table VIII

| No. | Admixture | Dosage Wt. % of cementit. component | Initial Air Content Vol. % | Air, w/ 30 min. mixing Vol. % | Air w/ 60 min. mixing Vol. % | Air after slump restor. Vol. % |
|---|---|---|---|---|---|---|
| 1. | FA + PEG + LS Wt. Ratio : .75 : .125 : .125 | .0205 | 5.7 | 6.3 | 6.4 | 5.2 |
| 2. | FA + EAP + AOS Wt. Ratio : .75 : .125 : .125 | .0138 | 6.0 | 6.1 | 5.8 | 6.0 |

While the invention has been described with reference to certain preferred embodiments thereof, those skilled in the art will appreciate that various modifications and substitutions can be made without departing from the spirit of the invention. In particular in the context of this invention aqueous solutions of the components described may have added thereto small amounts of compatible chelating agents for alkaline earth cations such as magnesium or calcium which normally occur in ordinary water but which would tend to precipitate the surface active agents herein described. Also, small amounts of compatible cosmetic coloring agents may be added.

**Claims**

1. A hydraulic cement mix comprising a hydraulic cement, aggregate in an amount of up to 80 % by weight based on the total weight of said hydraulic cement mix, sufficient water to effect hydraulic setting of said hydraulic cement, and an additive comprising : mixtures of the alkanolamine and alkali metal salts of foaming detergents such as alpha olefin sulfonates or alkylarylsulfonates — both kinds of sulfonates having a 12 to 24 carbon chain length — alcohol sulfates and ethoxylated alcohol sulfates and a fatty acid soap comprising the alkali metal or alkanolamine salts of fatty acids of the type found in tall oils ; and a nonionic component selected from polyethylene glycol derivatives and the diethanolamine adducts of fatty acid amides such as cocamide, wherein the relative proportions by weight of these three components on a 100 % active basis range, respectively, from 0 to 25 % for the detergent, 0 to 25 % for the nonionic component and 50 to 95 % for the fatty acid soap and the total dosage of the combinations required to secure the desired initial air content of said cementitious system, being about 5 ± 1 % by volume, is in the range of 0.002 to 0.06 weight percent with respect to the cementitious component on a 100 % active basis.

2. A hydraulic cement mix in accordance with claim 1 wherein said hydraulic cement comprises portland cement.

3. A hydraulic cement mix in accordance with claim 1 wherein said component may be a mixture of portland cement and pozzolan such as fly ash.

4. A hydraulic cement mix in accordance with claim 1 wherein said foaming detergent is the sodium salt of alpha olefin sulfonic acid.

5. A hydraulic cement mix in accordance with claim 1 wherein said foaming detergent is the sodium salt of dodecylbenzene sulfonic acid.

6. A hydraulic cement mix in accordance with claim 1 wherein said nonionic component is polyethylene glycol with an average molecular weight of about 400.

7. A process for entraining a stable air void system in hydraulic cement mixes which include the steps of preparing a mix containing hydraulic cement, aggregate in an amount up to 80 % by weight, based upon the total weight of said hydraulic cement mix, and sufficient water to effect hydraulic setting of the said hydraulic cement, comprising incorporating therein an additive comprising a mixture of an alkali or alkanolamine salt of a fatty acid of the type found in tall oils and a foaming detergent selected from alkali and alkanolamine salts of alkylarylsulfonic acid or alpha olefin sulfonic acid, — both kinds of sulfonic acids having a 12 to 24 carbon chain length —, alcohol sulfates and ethoxylated alcohol sulfates, and a nonionic component selected from polyethylene glycol derivatives and diethanolamine adducts of cocamide, said additive of itself comprising 50 to 95 % by weight of the fatty acid salt and 0 to 25 % of the foaming detergent and 0 to 25 % of the nonionic component and being employed at the dosage required to entrain the desired level of air in said hydraulic cement mix, being about $5 \pm 1$ % by volume, in the range of 0.002 to 0.06 weight percent with respect to the cementitious component on a 100 % active basis.

8. A process in accordance with claim 7 wherein said hydraulic cement is portland cement.

9. A process in accordance with claim 7 wherein said hydraulic component is a mixture of portland cement and fly ash.

### Patentansprüche

1. Hydraulische Zementmischung enthaltend hydraulischen Zement, Aggregat in einer Menge von bis zu 80 Gewichtsprozent bezogen auf das Gesamtgewicht der hydraulischen Zementmischung, genügend Wasser, um den hydraulischen Zement auszuhärten und ein Additiv, enthaltend Mischungen eines Alkanolamin- und/oder Alkalimetallsalzes von schäumenden Detergentien, wie Alphaolefinsulfonate oder Alkylarylsulfonate, wobei beide Sulfonate eine Kohlenwasserstoffkettenlänge von 12 bis 24 Kohlenstoffatomen aufweisen, Alkoholsulfate oder äthoxylierte Alkoholsulfate und einer Fettsäure-Seife, enthaltend ein Alkalimetallsalz und/oder ein Alkanolaminsalz einer Fettsäure vom Typus wie er in Tall-Oelen vorkommt, sowie eine nichtionogene Komponente aus der Reihe von Polyäthylenglycolderivaten und Diäthanolamin-Additionsprodukte von Fettsäureamiden, wie Cocossäureamide, worin der relative proportionale Gewichtsanteil dieser drei Komponenten bezogen auf den 100 %igen Aktivstoffbereich von 0 bis 25 % für die Detergentien, 0 bis 25 % für die nichtionogene Komponente und 50 bis 95 % für die Fettsäureseifen beträgt, und die Gesamtdosierung der Kombinationen, welcher notwendig ist um den gewünschten Luftanteil des Zementsystems sicherzustellen — wobei der Luftanteil etwa $5 \pm 1$ Volumprozente beträgt — in einem Bereich von 0,002 bis 0,06 Gewichtsprozenten bezogen auf die zementhaltige Komponente als 100 % Aktivstoff beträgt.

2. Hydraulische Zementmischung gemäss Anspruch 1, worin der hydraulische Zement Portland Zement enthält.

3. Hydraulische Zementmischung gemäss Anspruch 1, worin die genannte Komponente eine Mischung aus Portland Zement und Pozzolan, wie Flugasche, sein kann.

4. Hydraulische Zementmischung gemäss Anspruch 1, worin das schäumende Detergens das Natriumsalz von Alpha-Olefinsulfonsäure ist.

5. Hydraulische Zementmischung gemäss Anspruch 1, worin das schäumende Detergens das Natriumsalz von Dodecylbenzolsulfonsäure ist.

6. Hydraulische Zementmischung gemäss Anspruch 1, worin die nichtionogene Komponente ein Polyäthylenglykol mit einem mittleren Molekulargewicht von ungefähr 400 ist.

7. Verfahren zum Einverleiben eines stabilen Systems von Luftblasen in eine hydraulische Zementmischung durch Herstellung einer Mischung, enthaltend hydraulischen Zement, Aggregat in einer Menge bis zu 80 Gewichtsprozent, bezogen auf das Gesamtgewicht der hydraulischen Zementmischung und genügend Wasser, um den hydraulischen Zement auszuhärten, dadurch gekennzeichnet, dass man darin einarbeitet ein Additiv, enthaltend eine Mischung eines Alkalimetallsalzes oder Alkanolaminsalzes einer Fettsäure vom Typus wie er in Tall-Oelen vorkommt, eines schäumenden Detergents aus der Reihe der Alkali- oder Alkanolaminsalze einer Alkylarylsulfonsäure oder einer Alphaolefinsulfonsäure, wobei beide Sulfonsäuren eine Kohlenwasserstoffkette von 12 bis 24 Kohlenstoffatomen aufweist, der Alkoholsulfate und aethoxylierte Alkoholsulfate, und eine nichtionogene Komponente aus der Reihe der Polyäthylenglykolderivate und Diäthanolamin-Additionsprodukte von Cocossäureamiden, wobei dieses Additiv 50 bis 95 Gewichtsprozente der Salze von Fettsäuren und 0 bis 25 Gewichtsprozente des schäumenden Detergens und 0 bis 25 Gewichtsprozente der nichtionogenen Komponente enthält und in einer Dosierung eingesetzt wird, um den gewünschten Luftanteil im Zementsystem sicherzustellen, wobei der Luftanteil etwa $5 \pm 1$ Volumprozent ausmacht, in einem Bereich von 0,002 bis 0,06 Gewichtsprozenten bezogen auf die zementhaltige Komponente als 100 % Aktivstoff.

8. Verfahren gemäss Anspruch 7, worin der hydraulische Zement Portland Zement ist.

9. Verfahren gemäss Anspruch 7, worin der hydraulische Zement eine Mischung aus Portland-Zement und Flugasche ist.

### Revendications

1. Une gâchée de ciment hydraulique comprenant un ciment hydraulique, un agrégat en une quantité de jusqu'à 80 % en poids par rapport au poids total de ladite gâchée de ciment hydraulique, suffisamment d'eau pour effectuer la prise hydraulique dudit ciment hydraulique, et un additif comprenant : des mélanges des sels d'alcanolamines et de métaux alcalins de détergehts moussants tels que des alpha sulfonates d'oléfines ou des alkylarylsulfonates — les deux types de sulfonates ayant une longueur de chaîne de 12 à 24 atomes de carbone —, des sulfates d'alcools et des sulfates d'alcools éthoxylés et un savon d'acide gras comprenant les sels de métaux alcalins ou d'alcanolamine du type rencontré dans les tallols ; et un composant non ionique choisi parmi les dérivés du polyéthylèneglycol et les produits d'addition de la diéthanolamine avec des amides d'acides gras tels que le cocoamide, dans lequel les proportions relatives en poids de ces trois composants sur une base de 100 % de matière active varient, respectivement, de 0 à 25 % pour le détergent, de 0 à 25 % pour le composant non ionique et de 50 à 95 % pour le savon d'acide gras et le dosage total des combinaisons nécessaires pour assurer la teneur initiale désirée d'air dudit système cimentaire, étant d'environ 5 ± 1 % en volume, est de l'ordre de 0,002 à 0,06 % en poids par rapport au composant cimentaire sur une base de 100 % de matière active.

2. Une gâchée de ciment hydraulique selon la revendication 1, dans laquelle ledit ciment hydraulique comprend du ciment portland.

3. Une gâchée de ciment hydraulique selon la revendication 1, dans laquelle ledit composant peut. être un mélange de ciment portland et pouzzolanique tel que des cendres volantes.

4. Une gâchée de ciment hydraulique selon la revendication 1, dans laquelle ledit détergent moussant est le sel de sodium d'un acide alpha sulfonique d'une oléfine.

5. Une gâchée de ciment hydraulique selon la revendication 1, dans laquelle ledit détergent moussant est le sel de sodium de l'acide dodécylbenzènesulfonique.

6. Une gâchée de ciment hydraulique selon la revendication 1, dans laquelle le composant non ionique est un polyéthylèneglycol ayant un poids moléculaire moyen d'environ 400.

7. Un procédé pour entraîner un système stable d'alvéoles d'air dans des gâchées de ciment hydraulique qui comprend les étapes de préparer une gâchée contenant du ciment hydraulique, un agrégat en une quantité jusqu'à 80 % en poids, par rapport au poids total de ladite gâchée de ciment hydraulique, et suffisamment d'eau pour effectuer la prise hydraulique dudit ciment hydraulique, comprenant l'incorporation dans celle-ci d'un additif comprenant un mélange d'un sel alcalin ou d'alcanolamine d'un acide gras du type rencontré dans les tallols et un détergent moussant choisi parmi les sels alcalins et d'alcanolamines d'un acide alkylarylsulfonique ou alpha sulfonique d'une oléfine, — les deux types d'acides sulfoniques ayant une longueur de chaîne de 12 à 24 atomes de carbone —, les sulfates d'alcools et les sulfates d'alcools éthoxylés, et un composant non ionique choisi parmi les dérivés du polyéthylèneglycol et les produits d'addition de la diéthanolamine avec le cocoamide, ledit additif en lui-même comprenant de 50 à 95 % en poids du sel d'acide gras et de 0 à 25 % du détergent moussant et de 0 à 25 % du composant non ionique et étant utilisé au dosage nécessaire pour entraîner la teneur désirée d'air dans ladite gâchée de ciment hydraulique, étant d'environ 5 ± 1 en volume, de l'ordre de 0,002 à 0,06 % en poids par rapport au composant cimentaire sur une base de 100 % de matière active.

8. Un procédé selon la revendication 7, dans lequel ledit ciment hydraulique est du ciment portland.

9. Un procédé selon la revendication 7, dans lequel ledit composant hydraulique est un mélange de ciment portland et de cendres volantes.